**Europäisches Patentamt**

**European Patent Office**

**Office européen des brevets**

(19)

(11) Veröffentlichungsnummer : **0 383 065 B1**

(12) # EUROPÄISCHE PATENTSCHRIFT

(45) Veröffentlichungstag der Patentschrift :
**15.04.92 Patentblatt 92/16**

(51) Int. Cl.$^5$ : **F02M 21/02, F02M 51/08**

(21) Anmeldenummer : **90101372.2**

(22) Anmeldetag : **24.01.90**

(54) Ventil zum intermittierenden Einbringen von Kraftstoff.

(30) Priorität : **15.02.89 DE 3904480**

(43) Veröffentlichungstag der Anmeldung :
**22.08.90 Patentblatt 90/34**

(45) Bekanntmachung des Hinweises auf die
Patenterteilung :
**15.04.92 Patentblatt 92/16**

(84) Benannte Vertragsstaaten :
**DE FR GB IT**

(56) Entgegenhaltungen :
**EP-A- 0 106 699**
**EP-A- 0 246 373**
**DE-C- 522 433**

(73) Patentinhaber : **ROBERT BOSCH GMBH**
**Postfach 30 02 20**
**W-7000 Stuttgart 30 (DE)**

(72) Erfinder : **Kubach, Hans, Dipl.-Ing.**
**Bahnhofstrasse 47**
**W-7254 Hemmingen (DE)**
Erfinder : **Kaiser, Klaus, Dipl.-Ing. (FH)**
**Blumenstrasse 56**
**W-7145 Markgröningen (DE)**

EP 0 383 065 B1

## Beschreibung

Stand der Technik

Die Erfindung betrifft ein Ventil zum intermittierenden Einbringen von Kraftstoff, insbesondere gasförmigem Kraftstoff, in ein Saugrohr einer Brennkraftmaschine nach der Gattung des Hauptanspruchs.

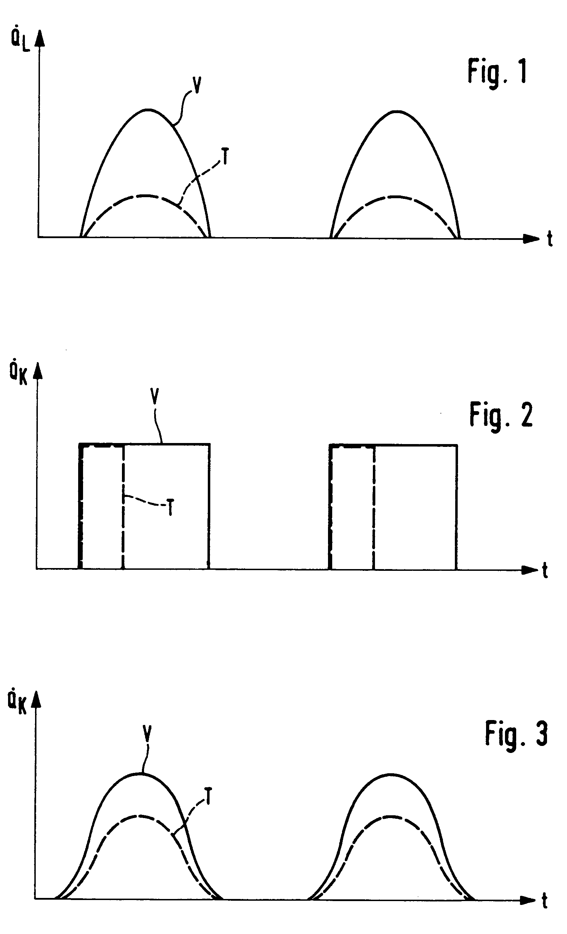

Beim intermittierenden Einblasen von gasförmigem Kraftstoff, wie z. B. Wasserstoff, jedoch auch von flüssigem Kraftstoff, soll die eingeblasene Menge $\int \dot{Q}_K dt$ und der Zeitverlauf $\dot{Q}_K$ zumindest bei voller Drehzahl einen ähnlichen Verlauf aufweisen wie das Einströmen der Luftmenge $\dot{Q}_L$ in den Motorzylinder gemäß Fig. 1, um eine optimale Verbrennung zu erzielen. Dabei stellt die Kurve V den Vollastbetrieb und die gestrichelte Kurve T den Teillastbetrieb dar.

Bei heute verbreiteten Einspritzanlagen (z. B. L-Jetronic mit intermittierender Einspritzung) werden die Ventile in jedem Betriebsmodus zwischen zwei festen Anschlägen umgeschaltet. In der Offenstellung der Ventile ist $\dot{Q}$ konstant. Im Leerlauf muß die Offenzeit jeweils sehr klein sein, so daß trotz kleiner Vollasttquerschnitte die präzise Bestimmung kleiner Mengen schwierig ist. Diese Verhältnisse sind in Fig. 2 wiederum für den Vollast- und Teillastbetrieb dargestellt. Es ist bereits vorgeschlagen worden, auch bei flüssigen Kraftstoffen auf den oberen Anschlag in einem ballistischen Sitzventil zu verzichten. Es ergibt sich dann eine Mengencharakteristik entsprechend Fig. 3. Bei kleinerer eingespritzter Menge ist $\dot{Q}_K$ und in geringerem Maße t kleiner, was durch eine entsprechende Verkürzung der Zeit der angelegten Spannung erreicht wird. Bei den bekannten und realisierten Einspritzsystemen wird dagegen ausschließlich die Zeit variiert, so daß dynamische Nachteile bei diesen ballistischen Systemen auftreten würden. Man könnte zwar den erforderlichen Hub vergrößern, jedoch haben sich diese Systeme aus diesen Gründen nicht durchgesetzt.

Will man die eingebrachte Kraftstoffmenge dem Luftmengenverlauf gemäß Fig. 1 anpassen, so müssen im Vergleich zu bisherigen Einspritzsystemen, bei denen das Ventil bei Vollast fast 100 % geöffnet sein darf, bei viel kürzeren Einblaszeiten die gleichen Mengen eingebracht werden. Bei gasförmigen Kraftstoffen müssen zusätzlich erheblich größere Querschnitte bei etwa gleichen Drücken im Vergleich zu flüssigen Kraftstoffen freigesetzt werden. Die Kinetik der bekannten Ventile würde dann sehr kritisch, insbesondere da die Dämpfung und Schmierwirkung flüssiger Kraftstoffe entfallen würde.

Aus der Dieseleinspritzung sind Systeme bekannt, bei denen die zeitliche Zumessung über eine Drehung synchron zur Nockenwelle erfolgt. Ein erstes Blendensystem am Mantel eines Kreiszylinders wird gegen ein zweites Blendensystem gedreht. Wenn das erste Blendensystem bei entsprechender Winkellage der Nockenwelle über dem zweiten liegt, ist das Ventil vollständig geöffnet. Bei den üblichen Dieseleinspritzpumpen ist die Menge über die Förderrate des Kolbens gegeben, so daß die Füllung pro Hub gleich ist. Bei den hier interessierenden Einspritzsystemen für Otto-Motoren existiert jedoch eine konstante Druckdifferenz über der Blende, wodurch die eingeblasene Menge pro Füllung bei diesen Systemen umgekehrt proportional zur Drehzahl ist. Dieses Verhalten zu korrigieren, würde einen immensen Aufwand beanspruchen.

Vorteile der Erfindung

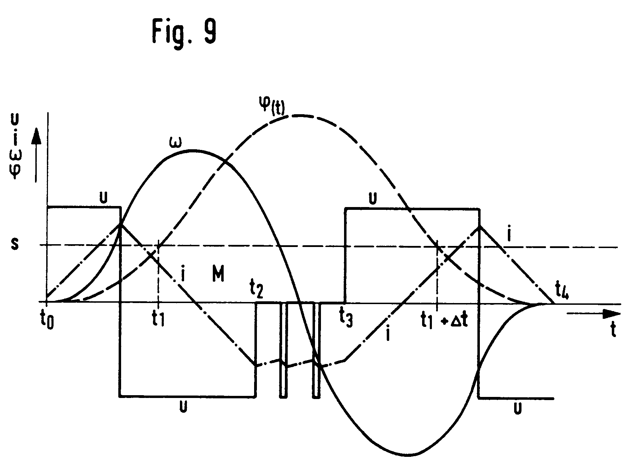

Das erfindungsgemäße Ventil mit den kennzeichnenden Merkmalen des Hauptanspruchs hat demgegenüber den Vorteil, daß durch das "fliegende"Schließen Öffnen und Schließen des Ventils ein sehr steiler zeitlicher Anstieg der Menge am Einspritzbeginn und ein entsprechend steiler Abfall am Einspritzende erfolgt, wobei eine Ventilbewegung etwa in Form einer Cosinuslinie nach Fig. 9 entsteht, die dem geforderten Zeitverlauf der Mengenzuführung von Fig. 1 weitgehend entspricht. Die Steuerkanten werden dabei sehr schnell überfahren, was deshalb von Vorteil ist, weil der Bereich der Steuerkanten in der Praxis schlecht definiert ist, da hier die Spaltleckage einen schlecht definierten und auch temperaturabhängigen Einfluß besitzt. Weiterhin ändern sich die pneumatischen Kräfte an der Öffnungsstelle der Steuerkante besonders stark, so daß bei langsamem Überfahren der Stellwert hier einen besonders großen Stellfehler besitzt. Bei den bekannten Sitzventilen ist das Abheben vom Anschlag wegen der großen Klebekräfte eines Sitzventils schlecht kontrollierbar. Diese Nachteile können hier nicht mehr auftreten.

Durch die in den Unteransprüchen aufgeführten Maßnahmen sind vorteilhafte Weiterbildungen und Verbesserungen des im Hauptanspruch angegebenen Ventils möglich.

Der vorgelagerte Teil der Zumeßbewegung beträgt vorzugsweise im wesentlichen 30 - 50 % der Zumeßbewegung, damit die Steuerkanten besonders schnell überfahren und der zeitliche Mengenanstieg . Mengenabfall besonders hoch ist.

Das Schieberventil kann als Hubsteller-Ventil ausgebildet sein, wobei dem Ventilglied ein die Zumeßbewegung begrenzender maximaler linearer Hub zugeordnet ist. Dabei ist das Ventilglied in vorteilhafter Weise mit einem elektromagnetischen Hubsteller mit magnetischer und/oder elektromagnetischer Rückstellkraft zur Ruhestellung hin verbunden. Hierdurch beginnt die Rückstellkraft bereits im stromlosen Zustand zu wirken, um eine "sichere" Schließung zu erreichen. Sie kann jedoch zusätzlich dynamisch noch durch eine Gegenspannung bzw. einen Gegenstrom unterstützt werden.

Als besonders günstig hat es sich erwiesen, das Schieberventil als Drehschieberventil auszubilden, wobei dem Ventilglied ein die Zumeßbewegung begrenzender maximaler Drehwinkel zugeordnet ist. Vorzugsweise ist das Ventilglied hierzu mit einem elektromagnetischen Drehsteller nach Art eines Synchronmotors verbunden, der insbesondere zwei elektrisch erregbare Magnetpole aufweist. Hierdurch wird durch die wirkende Magnetkraft eine Ruhestellung im stromlosen Zustand und eine Offenstellung bei elektrischer Erregung des Drehstellers definiert, zwischen denen eine Pendelbewegung stattfindet. Eine mechanische Drehwinkelbegrenzung ist prinzipiell nicht erforderlich, sie kann jedoch dennoch zusätzlich vorgesehen sein.

Zur Lagerung des Ventilsglieds sind zweckmäßigerweise Wälzlager vorgesehen, so daß auch gasförmige Kraftstoffe wie Wasserstoff ohne weiteres verwendet werden können. Eine Schmierung durch flüssige Kraftstoffe ist nicht erforderlich.

Das dichtend und drehbar in einer Zylinderbohrung angeordnete Ventilglied weist Steuerausnehmungen auf, durch die nach dem vorbestimmten Teil der Zumeß-Drehbewegung wenigstens ein radial in die Zylinderbohrung einmündender Zulaufkanal mit wenigstens einem zu einer Auslaßöffnung des Ventils verlaufenden Axialkanal verbindbar ist. Durch Optimierung der Steuerausnehmungen und der Zulaufkanalmündung kann die Kraftstoffzumessung optimiert werden. Durch Austausch des Ventilglieds ist eine Variabilität gegeben.

Der Axialkanal kann dabei im Ventilgehäuse neben dem Ventilglied verlaufen und zur Zylinderbohrung hin wenigstens teilweise offen sein. Hierbei sind die Steuerausnehmungen als wenigstens eine in Axialrichtung verlaufende Rinne am Umfang des Ventilglieds ausgebildet. Es ist jedoch auch möglich, daß der Axialkanal im oder am Ventilglied verläuft, insbesondere konzentrisch im Ventilglied, und daß die Steuerausnehmungen als den Axialkanal mit der Oberfläche des Ventilglieds verbindende Öffnungen ausgebildet sind.

Eine besonders exakte Kraftstoffzumessung ergibt sich dadurch, daß ein die Position des Ventilglieds erfassender Positionssensor vorgesehen ist. Hierzu dient zweckmäßigerweise ein das Ventilglied oder einen Fortsatz des Ventilglieds umgreifende, im Ventilgehäuse angeordnete Sensorspulenanordnung. Mit diesem Positionssensor ist eine Regelung der Ventilgliedbewegung und damit eine Regelung des eingespritzten Mengenverlaufs möglich. Bei diesem Regelkreis dient das Signal des Positionssensors als Ist-Wert, und vorgegebene Kennlinien dienen als Soll-Wert. Eine Positionsregelung (Kennlinien gemäß den Fig. 1 und 9) hat gegenüber dem bekannten Mengenverlauf gemäß Fig. 3 noch die folgenden Vorteile:

1. Eine Positionsregelung ist auch im Bereich der Steuerkanten möglich, was bei einem bekannten Sitzventil kaum möglich ist.

2. Die Coulomb-Reibung springt bezüglich ihres Vorzeichens bei einer Richtungsänderung der Bewegung um. Der resultierende Lagefehler klingt mit der Zeit ab, er ist also proportional zur Zahl der Richtungsänderungen im Zumeßbereich. Er tritt einmal in Fig. 1 und dreimal in Fig. 3 auf.

3. Im Normalbetrieb schlägt das Ventilglied auch in seiner Stellung "Zu" an keinen Anschlag, was bei der fehlenden Dämpfung und Schmierung sehr wichtig ist.

Als Stellgröße dient in vorteilhafter Weise eine getaktete Steuerspannung mit zwei Polaritäten, wobei durch die Taktung im Idealfall verlustfrei der effektive Strom in Abhängigkeit der gewünschten Kennlinie geregelt werden kann (Fig. 9).

Zeichnung

Ausführungsbeispiele der Erfindung sind in der Zeichnung dargestellt und in der nachfolgenden Beschreibung näher erläutert. Es zeigen:

Fig. 1 eine Kennlinie zur Darstellung der von einer Brennkraftmaschine angesaugten Luftmenge $\dot{Q}_L$ in Abhängigkeit der Zeit t,

Fig. 2 eine entsprechende Kennlinie für die zugeführte Kraftstoffmenge bei bekannten Einspritzventilen mit zwei Anschlägen,

Fig. 3 eine entsprechende Kennlinie für ein bekanntes ballistisches Sitzventil mit einem Anschlag,

Fig. 4 die Seitenansicht eines Einspritzventils als Ausführungsbeispiel der Erfindung, wobei der mittlere, das Ventilglied darstellende Bereich sowie ein Aufsteckelement zur Zuführung von Kraftstoff im Schnitt dargestellt sind,

Fig. 5 und 6 einen Querschnitt entlang der Schnittlinie A-B im geöffneten und geschlossenen Zustand des Ventils zur Darstellung der Zumeßöffnungen und -kanäle,

Fig. 7 einen Querschnitt entlang der Schnittlinie C-D zur Darstellung des Positionssensors,

Fig. 8 eine weitere Ausführung eines Ventilglieds im Ventilgehäuse und

Fig. 9 ein Diagramm zur Erläuterung der Bewegung des Ventilglieds in Abhängigkeit der elektrischen Spannung U und des elektrischen Stroms I.

Die in den Fig. 1 bis 3 dargestellten Kennlinien geben bezüglich Signalabstand, Signalbreite usw. nicht unbedingt typische oder reale Verhältnisse wieder, sondern dienen lediglich zur Verdeutlichung des jeweiligen Kurvenverlaufs. Die tatsächlichen Signalabstände sind im allgemeinen größer in Relation zur Signalbreite.

Beschreibung der Ausführungsbeispiele

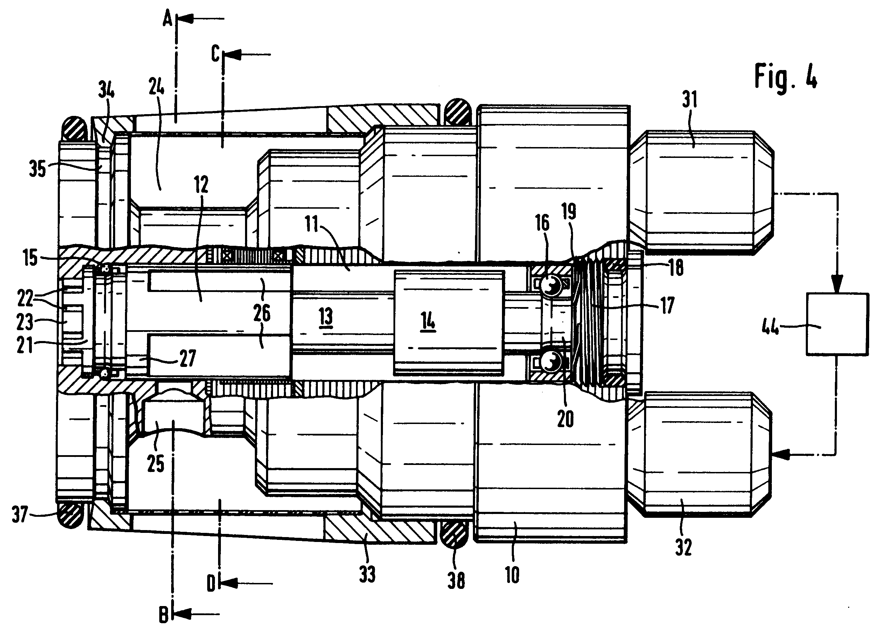

Bei dem in den Fig. 4 bis 7 dargestellten Ausführungsbeispiel besteht ein Ventil aus einem drehsymmetrischen Ventilgehäuse 10, das eine zentrische, axial verlaufende zylindrische Bohrung 11 aufweist. In dieser Bohrung 11 sind ein Ventilglied 12 und ein damit über eine Achse 13 verbundener magnetischer Rotor 14 durch zwei endseitige Kugellager 15, 16 drehbar gelagert. Anstelle von Kugellagern können selbstverständlich auch andere Wälzlager treten. Das aus Ventilglied 12 und Rotor 14 bestehende Element ist von der rechten Seite her in die Bohrung 11 einschiebbar, wobei eine bestimmte Formgebung des linken Endbereichs des Ventilglieds 12 und des Ventilgehäuses 10 im Bereich des linken Kugellagers 15 einen Anschlag bildet. Die Bohrung 11 wird von der rechten Seite her durch einen Schraubverschluß 17 dichtend verschlossen, der hierzu einen in einer Umfangsnut angeordneten Dichtungsring 18 trägt. Das rechte Kugellager 16 stützt sich über ein Federelement 19 am Schraubverschluß 17 ab, wobei dieses Kugellager 16 seinerseits an einer Verjüngung 20 der Achse 13 angeordnet ist und sich in die linke Richtung gegen diese Achse 13 abstützt. Der linke, durch das Kugellager 15 gelagerte Endbereich des Ventilglieds 12 weist an seiner Endkante regelmäßige rechteckige Ausnehmungen 22 auf, in die im montierten Zustand schmälere Vorsprünge 23 am Umfangsbereich der Bohrungsmündung eingreifen, wodurch ein maximaler Verstellwinkel vorgegeben ist.

Das Ventilgehäuse 10 weist im Bereich der Schnittlinie A-B umfangsseitig eine nutförmige Einformung 24 auf, wobei sich drei als Zulaufkanäle 25 ausgebildete, radiale Stufenbohrungen, die untereinander um jeweils 120° versetzt sind, von der Bohrung 11 bis zum Boden dieser Einformung 24 erstrecken. Das Ventilglied 12 weist umfangsseitig ebenfalls drei regelmäßig angeordnete, axial verlaufende Rinnen 26 mit im wesentlichen halbkreisförmigem Querschnitt auf, wobei die Rinnen zur linken Seite hin durch einen dichtend an der Innenseite der Bohrung 11 anliegenden Steg 27 begrenzt sind.

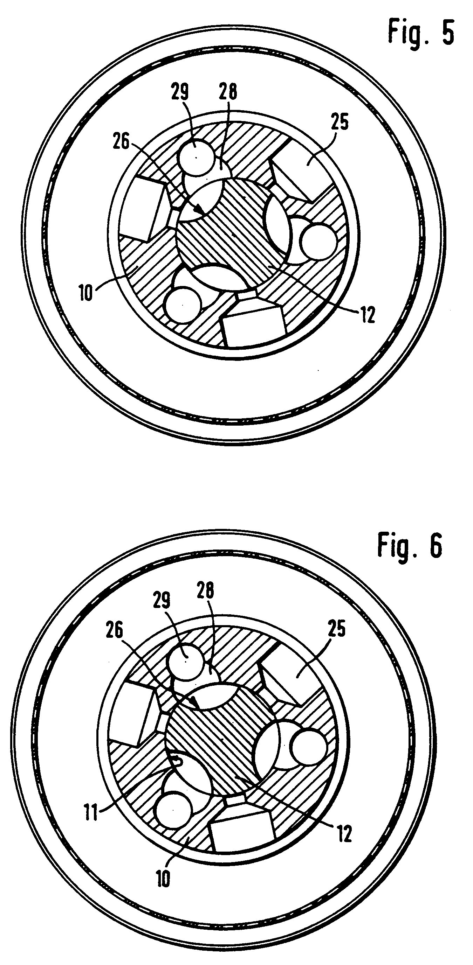

Gemäß den Fig. 5 und 6 sind im Ventilgehäuse 10 an der Bohrung 11 ebenfalls Rinnen 28 mit im wesentlichen halbkreisförmigem Querschnitt eingeformt, die sich in axialer Richtung im Bereich der Zulaufkanäle 25 erstrecken und neben diesen angeordnet sind. Vom äußeren Bereich dieser Rinnen 28 aus erstrecken sich drei Axialbohrungen 29 als Auslaßkanäle bis zur gemäß Fig. 4 linken Stirnseite des Ventils.

Fig. 6 zeigt das Ventil im elektrisch nicht erregten Ruhezustand. Die Zulaufkanäle 25 sind von den Axialbohrungen 29 durch das Ventilglied 12 getrennt, so daß kein Kraftstoff hindurchströmen kann. Bei einer elektrischen Betätigung des Ventils beginnt sich das Ventilglied 12 im Gegenuhrzeigersinn zu drehen, wobei nach einem bestimmten Winkel dieser Zumeßbewegung die Kanten der Rinnen 26 die nächstliegenden Kanten der inneren Öffnungen der Zulaufkanäle 25 erreichen. Nun kann Kraftstoff durch die Zulaufkanäle 25, die Rinnen 26, die Rinnen 28 und die Axialbohrungen 29 des Ventils hindurchströmen. In Fig. 5 ist der nahezu vollständig geöffnete Zustand des Ventils dargestellt. In Abhängigkeit des Abschaltzeitpunkts der elektrischen Erregungg bzw. des Zeitpunkts der Spannungsumkehr erfolgt dann eine Rückbewegung in die in Fig. 6 dargestellte Stellung. Dies wird in Zusammenhang mit Fig. 9 noch näher erläutert.

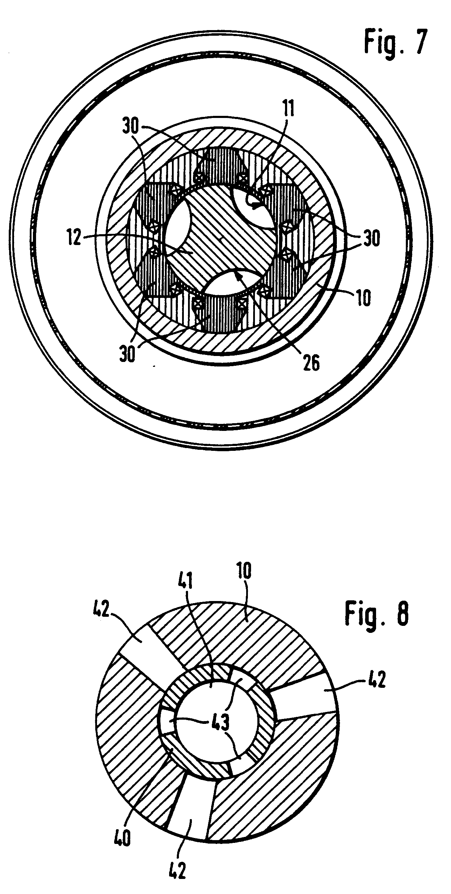

Die in Fig. 7 gezeigte Schnittdarstellung gemäß der Schnittlinie C-D in Fig. 4 zeigt einen Positionssensor für das Ventilglied 12. In das Ventilgehäuse 10 sind zwei in Serie geschaltete dreipolige Sensorwicklungen 30 um die Bohrung 11 herum eingelassen. Infolge der Rinnen 26 bildet das in diesem Bereich verkupferte Ventilglied 12 an dieser Stelle einen Sensorrotor mit zwei dreifachen Kupferpolen. In Abhängigkeit der Stellung dieses Rotors wird hochfrequente Wechselspannung an den Sensorwicklungen 30 in Abhängigkeit des Position des Ventilglieds 12 so bedämpft, daß bei Zunahme der Dämpfung in der einen Wicklung die Dämpfung in der anderen Wicklung abnimmt. Die zwei Sensorwicklungen 30 können getrennt oder mit einem gemeinsamen Pol aus dem Ventilgehäuse herausgeführt werden. Hierzu dient eine elektrische Steckvorrichtung 31.

Der auf der Achse 13 angeordnete magnetische Rotor 14 ist zusammen mit einer in Fig. 4 nicht erkennbaren Magnetwicklung im Ventilgehäuse 10 nach Art eines Synchronmotors ausgebildet. Die Magnetwicklung weist dabei zwei elektrisch erregbare Magnetpole auf. Entsprechend dem Richtungssinn des elektrischen Stromes wird ein Antriebsmoment in den beiden Drehrichtungen erzeugt, so daß der magnetische Rotor 14 und damit das Ventilglied 12 hin- und herpendeln. Eine derartige Anordnung wird auch als Torque-Motor bezeichnet. Zur Stromzuführung für diese Wicklung dient eine elektrische Steckvorrichtung 32.

Gemäß Fig. 4 wird ein Filterrohr 33 von links her auf das Ventilgehäuse 10 aufgeschoben und überdeckt im aufgeschobenen Zustand die Einformung 24. Dabei erfolgt eine Verrastung eines nach innen vorstehenden, ringförmigen Vorsprungs 34 des Anschlußelements 33 mit einer Umfangsnut 35 am Ventilgehäuse 10. Das Filterrohr 33 weist in seinem mittleren Bereich den Kraftstoff durchlassende Öffnungen 36 auf. Zu beiden Seiten des Filterrohrs 33 liegen Ringdichtungen 37, 38 am Ventilgehäuse 10 an. Das mit dem Filterrohr 33 versehene Ventil kann nun in eine nicht dargestellte Halterung eingesetzt werden, die insbesondere ins Ansaugrohr einer Brennkraftmaschine einschraubbar ist und die seitlich Zuführungen für den Kraftstoff aufweist, die das Ventil ringkanalförmig umgeben. Die Ringdichtungen 37, 38 dichten zum Saugrohr hin ab.

In Fig. 8 ist eine alternative Ausbildung des Ventilglieds im entsprechenden Bereich der Schnittlinie A-B dargestellt. Ein mit der Achse 13 verbundenes Ventilglied 40 weist eine sich bis zum auslaßseitigen Ende des Ventils erstreckende Mittelbohrung 41 auf, die im Bereich von drei radialen Zulaufkanälen 42 im Ventilgehäuse 10 über Steueröffnungen 43 mit diesen Zulaufkanälen 42 verbindbar ist. Fig. 8 zeigt den geschlossenen Zustand des Ventils. Nach einer bestimmten Drehung des Ventilglieds 40 erreichen die Steueröffnungen 43 die Position der Zulaufkanäle 42, was eine Zumessung von Kraftstoff zur Folge hat.

Eine weitere alternative Ausgestaltung würde darin bestehen, die Rinnen 26 gemäß den Fig. 5 und 6 bis zur Auslaßseite des Ventils zu verlängern, wodurch dann die Rinnen 28 und Axialbohrungen 29 entfallen könnten.

Das in Fig. 9 dargestellte Diagramm zeigt die Zusammenhänge zwischen der Erregerspannung U und dem Erregerstrom I zur Erregung der Magnetwicklung für den magnetischen Rotor 14, der Drehgeschwindigkeit $\omega$ sowie dem Drehwinkel $\phi$ der Drehung dieses Rotors 14 bzw. des Ventilglieds 12 in Abhängigkeit von der Zeit t. Die den Drehwinkel $\phi$ darstellende Kurve ist gestrichelt dargestellt. Eine Umsteuerlinie S kennzeichnet den Öffnungs- und Schließbeginn des Ventils, das heißt, wenn der Drehwinkel $\phi$ von unten her diese Umsteuerlinie S schneidet, beginnt die Öffnung des Ventils, also zum Zeitpunkt $t_1$. Die durchgezogene eckige Linie gibt den Spannungsverlauf U und die strichpunktierte Linie den Stromverlauf I wieder.

Zum Zeitpunkt $t_0$ wird die Spannung U eingeschaltet, der Strom I beginnt anzusteigen, und das Ventilglied 12 verändert entsprechend immer schneller mit $\omega$ seinen Drehwinkel. Die Änderung des Drehwinkels erfolgt ungefähr proportional $t^3$. Zu einem vorgesehenen Zeitpunkt, der insbesondere über den Positionssensor in Abhängigkeit des erreichten Drehwinkels geregelt wird, wechselt die Spannung U ihre Polarität, und der Strom I sink ab.

Zum Zeitpunkt $t_1$ wird über die durch die Rinnen 28 und Zulaufkanäle 25 gebildeten Steuerkanten der Kraftstoffdurchgang freigegeben. Trotz absinkenden Stroms, der in den negativen Bereich verläuft, vergrößert sich der Drehwinkel infolge der Rotationsenergie proportional zu $\omega^2$ weiter, und die eingeblasene Menge nimmt proportional dazu zu. Zwischen den Zeitpunkten $t_2$ und $t_3$ wird die negative Spannung U getaktet, wobei die Taktung zwischen dem Maximalwert der negativen Polarität und dem Null-Wert erfolgt. Die Taktung erfolgt wiederum geregelt, wodurch erreicht wird, daß das Ventilglied 12 nicht zu schnell zum Stehen kommt und seine Drehrichtung dann umkehrt. Je länger getaktet wird, desto mehr erhöht sich die eingeblasene Kraftstoffmenge. Der Strom pendelt dabei um einen negativen Wert herum.

Zum Zeitpunkt $t_3$ wechselt die Spannung U wieder ihre Polarität, und der Strom steigt wieder an, benötigt allerdings noch eine gewisse Zeit, bis er wieder in den positiven Bereich gelangt. Infolge der Rotationsenergie setzt das Ventilglied 12 dennoch seine Rücklaufbewegung fort und erreicht zum Zeitpunkt $t_1 + \Delta t$ wieder die Umsteuerlinie S, wodurch eine weitere Kraftstoffzufuhr unterbrochen wird. Schließlich erreicht das Ventilglied 12 zum Zeitpunkt $t_4$ seine äußerste Rücklaufposition, und der Zyklus beginnt erneut. Durch diesen Vorlauf des Ventilglieds 12 bis zur eigentlichen Öffnung und Nachlauf nach dem eigentlichen Schließen wird die Umsteuerlinie S sehr schnell durchlaufen, so daß zum gewünschten Zeitpunkt $t_1$ das Ventil sehr schnell öffnet und definiert eine große Menge Kraftstoff einbringt. Hierdurch nähert sich die Kennlinie dem in Fig. 1 dargestellten Idealfall. Da sowohl die Umsteuerung der Polarität der Steuerspannung als auch die prinzipiell nicht nur zwischen $t_2$ und $t_3$ erfolgende Taktung durch den Positionssensor geregelt wird, ist eine praktisch ideale Anpassung des Ist-Wertes an den Soll-Wert möglich. Die dargestellte Kennlinie gilt für ein Stellwerk, dessen Moment etwa proportional zum Strom I ist. Dies gilt auch für negativen Strom. Bei anderen Stellwerken trifft dies nicht in jedem Falle zu, so daß im Einzelfalle auch nur unipolar Strom fließen soll. Dann ist es auch möglich, einen zusätzlichen Vorstrom zu verwenden.

Es sei noch festgehalten, daß das erfindungsgemäße Ventil anstelle mit einem drehbaren Ventilglied auch mit einem linear bewegbaren Ventilglied versehen sein kann. Anstelle eines Drehstellers nach Art eines Synchronmotors tritt dann ein elektromagnetischer Hubsteller. Auch bei einer solchen Ausführungsform ist es wesentlich, daß ein Überfahren der Umsteuerlinie erst nach einem vorbestimmten Hub des Ventilglieds erfolgt. Auch bei dieser Ausführung wird zweckmäßigerweise ein Positionssensor zur Erfassung der Linearbewegung des Ventilglieds vorgesehen.

In Fig. 4 ist eine Regelschaltung 44 für das beschriebene Ventil symbolisch dargestellt, die über die Steckvorrichtung 31 mit den Sensorsignalen versorgt wird und über die Steckvorrichtung 32 die Stellgrößensignale dem Ventil zuführt. Diese Regelschaltung 44 kann selbstverständlich Teil eines Kraftstoffeinspritzsystems sein bzw. in dessen Steuerfunktionen integriert sein.

**Patentansprüche**

1. Ventil zum intermittierenden Einbringen von Kraftstoff, insbesondere gasförmigem Kraftstoff, in ein Saugrohr einer Brennkraftmaschine, mit einem in einem Ventilgehäuse (10) angeordneten, elektrisch betätigbaren Ventilglied (12; 40), das zusammen mit wenigstens einem von dem Ventilglied (12; 40) gesteuerten Zumeßkanal (25, 26, 28, 29; 41, 42, 43) zur Zumessung des Kraftstoffes in wenigstens einen Auslaßkanal (28, 29; 41) dient, dadurch gekennzeichnet, daß das Ventil als Schieberventil ausgebildet ist und das Ventilglied (12; 40) während seiner Zumeßbewegung eine etwa kosinusförmige Positionsveränderung ausführt, wobei die Zumessung des Kraftstoffs durch das Ventilglied (12; 40) und den wenigstens einen Zumeßkanal (25, 26, 28, 29; 41, 42, 43) erst nach einem vorbestimmten Teil der Zumeßbewegung ab einer Ruhestellung des Ventilgliedes (12; 40) erfolgt.

2. Ventil nach Anspruch 1, dadurch gekennzeichnet, daß der vorbestimmte Teil in etwa 30 bis 50 % der Zumeßbewegung beträgt.

3. Ventil nach Anspruch 1 oder 2, dadurch gekennzeichnet, daß das Schieberventil als Hubsteller-Ventil ausgebildet ist und daß das Ventilglied einen die Zumeßbewegung begrenzenden maximalen linearen Hub hat.

4. Ventil nach Anspruch 3, dadurch gekennzeichnet, daß das Ventilglied mit einem elektromagnetischen Hubsteller mit magnetischer und/oder elektromagnetischer Rückstellkraft zur Ruhestellung hin verbunden ist.

5. Ventil nach Anspruch 1 oder 2, dadurch gekennzeichnet, daß das Schieberventil als Drehschieberventil ausgebildet ist und daß das Ventilglied (12; 40) einen die Zumeßbewegung begrenzenden maximalen Drehwinkel hat.

6. Ventil nach Anspruch 5, dadurch gekennzeichnet, daß das Ventilglied (12; 40) mit einem elektromagnetischen Drehsteller (14) nach Art eines Synchronmotors verbunden ist.

7. Ventil nach Anspruch 6, dadurch gekennzeichnet, daß der nach Art des Synchronmotors ausgebildete Drehsteller (14) zwei elektrisch erregbare Magnetpole aufweist.

8. Ventil nach einem der Ansprüche 5 bis 7, dadurch gekennzeichnet, daß das Ventilglied (12; 40) durch Wälzlager (15, 16) gelagert ist.

9. Ventil nach einem der Ansprüche 5 bis 8, dadurch gekennzeichnet, daß das dichtend und drehbar in einer zylindrischen Bohrung (11) angeordnete Ventilglied (12; 40) Steuerausnehmungen (26; 43) aufweist, durch die nach dem vorbestimmten Teil der Zumeß-Drehbewegung ab einer Ruhestellung des Ventilgliedes (12; 40) wenigstens ein radial in die Zylinderbohrung (11) einmündender Zulaufkanal (25, 42) mit wenigstens einem zu einer Auslaßöffnung des Ventils verlaufenden Axialkanal (29; 41) verbindbar ist.

10. Ventil nach Anspruch 9, dadurch gekennzeichnet, daß der Axialkanal (29) neben dem Ventilglied (12) im Ventilgehäuse (10) verläuft und zur Bohrung (11) hin wenigstens teilweise offen ist.

11. Ventil nach Anspruch 10, dadurch gekennzeichnet, daß die Steuerausnehmungen (26) als in Axialrichtung verlaufende Rinnen am Umfang des Ventilglieds (12) ausgebildet sind.

12. Ventil nach Anspruch 9, dadurch gekennzeichnet, daß der Axialkanal (41) im oder am Ventilglied (40) verläuft.

13. Ventil nach Anspruch 12, dadurch gekennzeichnet, daß der Axialkanal (41) konzentrisch im Ventilglied (40) verläuft und daß die Steuerausnehmungen (43) als den Axialkanal (41) mit der Oberfläche des Ventilglieds (40) verbindende Öffnungen ausgebildet sind.

14. Ventil nach einem der vorhergehenden Ansprüche, dadurch gekennzeichnet, daß zur Steuerung des Ventilglieds (12; 40) in seiner Offenstellung und Schließstellung Mittel zum Abschalten und/oder Umkehren des Steuerstroms vorgesehen sind.

15. Ventil nach einem der vorhergehenden Ansprüche, dadurch gekennzeichnet, daß ein die Position des Ventilglieds (12; 40) erfassender Positionssensor (30) vorgesehen ist.

16. Ventil nach Anspruch 15, dadurch gekennzeichnet, daß eine das Ventilglied (12) oder einen Fortsatz des Ventilglieds umgreifende, im Ventilgehäuse angeordnete Sensorspulenanordnung (30) vorgesehen ist.

17. Ventil nach Anspruch 16, dadurch gekennzeichnet, daß die Sensorspulenanordnung (30) im Bereich von Steuerausnehmungen (26) oder Axialkanälen in der Oberfläche des Ventilglieds (12) angeordnet ist.

18. Ventil nach einem der Ansprüche 15 bis 17, dadurch gekennzeichnet, daß ein die Zumeßbewegung bestimmender Regelkreis vorgesehen ist, wobei das Signal des Positionssensors (30) als Ist-Wert und vorgegebene Steuerkennlinien als Soll-Wert dienen.

19. Ventil nach Anspruch 18, dadurch gekennzeichnet, daß als Stellgröße eine zwischen zwei Polaritäten oder zu einem Null-Wert wechselnde, taktbare Spannung vorgesehen ist.

20. Ventil nach Anspruch 19, dadurch gekennzeichnet, daß die Taktung zwischen dem Spannungswert wenigstens der einen Polarität und dem Null-Wert erfolgt.

## Claims

1. Valve for the intermittent introduction of fuel, in particular gaseous fuel, into an intake pipe of an internal combustion engine, with a valve member (12; 40) which is arranged in a valve casing (10), is electrically actuable and, together with at least one metering passage (25, 26, 28, 29; 41, 42, 43) controlled by the valve member (12; 40) and intended for metering the fuel into at least one outlet passage (28, 29; 41), characterised in that the valve is designed as a slide valve and, during its metering movement, the valve member (12; 40) performs an approximately cosinusoidal position change, the metering of the fuel by the valve member (12; 40) and the metering passage (25, 26, 28, 29; 41, 42, 43), of which there is at least one, taking place only after a predetermined portion of the metering movement from a rest position of the valve member (12; 40).

2. Valve according to Claim 1, characterised in that the predetermined portion amounts to about 30 to 50% of the metering movement.

3. Valve according to Claim 1 or 2, characterised in that the slide valve is designed as a reciprocating-actuator valve and in that the valve member has a maximum linear stroke which limits the metering movement.

4. Valve according to Claim 3, characterised in that the valve member is connected to an electromagnetic reciprocating actuator with a magnetic and/or electro-magnetic return force towards the rest position.

5. Valve according to Claim 1 or 2, characterised in that the slide valve is designed as a rotary slide valve and in that the valve member (12; 40) has a maximum angle of rotation which limits the metering movement.

6. Valve according to Claim 5, characterised in that the valve member (12; 40) is connected to an electromagnetic rotating actuator (14) of the synchronous-motor type.

7. Valve according to Claim 6, characterised in that the rotating actuator (14) designed in the manner of the synchronous motor has two electrically excitable magnet poles.

8. Valve according to one of Claims 5 to 7, characterised in that the valve member (12; 40) is supported by rolling bearings (15, 16).

9. Valve according to one of Claims 5 to 8, characterised in that the valve member (12; 40), which is arranged sealingly and rotatably in a cylindrical bore (11), has control slots (26; 43), via which at least one inflow passage (25, 42) opening radially into the cylinder bore (11) can be connected to at least one axial passage (29; 41) extending to an outlet opening of the valve after the predetermined portion of the rotary metering movement from a rest position of the valve member (12; 40).

10. Valve according to Claim 9, characterised in that the axial passage (29) extends adjacently to the valve member (12) in the valve casing (10) and is at least partially open towards the bore (11).

11. Valve according to Claim 10, characterised in that the control slots (26) are designed as axially extending channels on the circumference of the valve member (12).

12. Valve according to Claim 9, characterised in that the axial passage (41) extends in or on the valve member (40).

13. Valve according to Claim 12, characterised in that the axial passage (41) extends concentrically in the valve member (40) and in that the control slots (43) are designed as openings which connect the axial passage (41) to the surface of the valve member (40).

14. Valve according to one of the preceding claims, characterised in that means for switching off and/or reversing the control current are provided for controlling the valve member (12; 40) in its open position and closed position.

15. Valve according to one of the preceding claims, characterised in that a position sensor (30) which detects the position of the valve member (12; 40) is provided.

16. Valve according to Claim 15, characterised in that a sensor-coil arrangement (30) surrounding the valve member (12) or an extension of the valve member and arranged in the valve casing is provided.

17. Valve according to Claim 16, characterised in that the sensor-coil arrangement (30) is arranged in the region of control slots (26) or axial passages in the surface of the valve member (12).

18. Valve according to one of Claims 15 to 17, characterised in that a control loop which determines the metering movement is provided, the signal of the position sensor (30) serving as actual value and predetermined control characteristics serving as desired value.

19. Valve according to Claim 18, characterised in that a voltage which changes between two polarities or to a zero value and can be pulsed is provided as manipulated variable.

20. Valve according to Claim 19, characterised in that the pulsing is effected between the voltage value of at least one of the polarities and the zero value.

EP 0 383 065 B1

**Revendications**

1. Soupape pour l'introduction intermittente de carburant, notamment d'un carburant gazeux dans la tubulure d'aspiration d'un moteur à combustion interne comportant un élément de soupape (12, 40) actionné électriquement, placé dans un boîtier de soupape (10), cet élément servant au dosage du carburant au moins dans un canal de sortie (28, 29, 40) en liaison avec au moins un canal de dosage (25, 26, 28, 29 ; 41, 42, 43) commandé par l'élément de soupape (12, 40), soupape caractérisée en ce qu'elle est réalisée sous la forme d'un distributeur et l'élément de soupape (12, 40) exécute pendant son mouvement de dosage, un déplacement sensiblement sinusoïdal, le dosage du carburant à travers l'élément de soupape (12, 40) et au moins un canal de dosage (25, 26, 28, 29 ; 41, 42, 43) ne se faisant qu'après le parcours d'une partie prédéterminée du mouvement de dosage à partir de la position de repos de l'élément de soupape (12, 40).

2. Soupape selon la revendication 1, caractérisée en ce que la partie prédéterminée représente entre 30 et 50 % du mouvement de dosage.

3. Soupape selon la revendication 1 ou 2, caractérisée en ce que la soupape en forme de distributeur est une soupape à dispositif de positionnement en translation et l'élément de soupape présente une course linéaire maximale limitant le mouvement de dosage.

4. Soupape selon la revendication 3, caractérisée en ce que l'élément de soupape est relié à un dispositif de commande de translation électromagnétique à force de rappel magnétique et/ou électromagnétique jusqu'à la position de repos.

5. Soupape selon la revendication 1 ou 2, caractérisée en ce que la soupape-distributeur est un distributeur rotatif et l'élément de soupape (12, 40) présente un angle de rotation maximum qui limite le mouvement de dosage.

6. Soupape selon la revendication 5, caractérisée en ce que l'élément de soupape (12, 40) est relié à un organe de positionnement en rotation (14), électromagnétique assimilable à un moteur synchrone.

7. Soupape selon la revendication 6, caractérisée en ce que l'organe de positionnement en rotation (14), en forme de moteur synchrone, comporte deux pôles magnétiques excités électriquement.

8. Soupape selon l'une des revendications 5 à 7, caractérisée en ce que l'élément de soupape (12, 40) est monté dans des paliers de roulement (15, 16).

9. Soupape selon l'une des revendications 5 à 8, caractérisée en ce que l'élément de soupape (12, 40) logé de manière étanche et rotative dans l'alésage cylindrique (11) comporte des cavités de commande (26, 43) qui peuvent être reliées après la partie prédéterminée du mouvement de rotation de dosage à partir d'une position de repos pour l'élément de soupape (12, 40), à au moins un canal d'alimentation (25, 42) débouchant radialement dans l'alésage (11) et ayant au moins un canal axial (29, 41) qui peut être relié à l'un des orifices de sortie de la soupape.

10. Soupape selon la revendication 9, caractérisée en ce que le canal axial (29) passe à côté de l'élément de soupape (12) dans le boîtier de soupape (10) et est au moins partiellement ouvert en direction de l'alésage (11).

11. Soupape selon la revendication 10, caractérisée en ce que les cavités de commande (26) sont des rainures axiales à la périphérie de l'élément de soupape (12).

12. Soupape selon la revendication 9, caractérisée en ce que le canal axial (41) passe dans ou sur l'élément de soupape (40).

13. Soupape selon la revendication 12, caractérisée en ce que le canal axial (41) passe concentriquement dans l'élément de soupape (40) et les cavités de commande (43) sont réalisées sous la forme d'ouvertures qui relient le canal axial (41) à la surface de l'élément de soupape (40).

14. Soupape selon l'une des revendications précédentes, caractérisée en ce qu'elle comporte des moyens pour couper et/ou inverser le courant électrique de commande de l'élément de soupape (12, 40) dans sa position d'ouverture et sa position de fermeture.

15. Soupape selon l'une des revendications précédentes, caractérisée par un capteur de position (30) qui détecte la position de l'élément de soupape (12, 40).

16. Soupape selon la revendication 15, caractérisée par un montage de bobines de capteur (30) prévu dans le boîtier de la soupape et qui entoure l'élément de soupape (12) ou un prolongement de l'élément de soupape.

17. Soupape selon la revendication 16, caractérisée en ce que le montage à bobines de capteur (30) est prévu au niveau des cavités de commande (26) ou des canaux axiaux dans la surface de l'élément de soupape (12).

18. Soupape selon l'une des revendications 15 à 17, caractérisée par une boucle de régulation qui définit le mouvement de dosage et le signal du capteur de position (30) sert de valeur réelle et les caractéristiques de commande servent de valeurs de consigne.

19. Soupape selon la revendication 18, caractérisée en ce que la grandeur de réglage est une tension hachée, qui alterne entre deux polarités ou par rapport à la valeur nulle.

20. Soupape selon la revendication 19, caractérisée en ce que le hachage se fait entre la valeur de la tension correspondant à l'une des polarités et la valeur nulle.

$\dot{Q}_L$

Fig. 1

V

T

t

$\dot{Q}_K$

Fig. 2

V

T

t

$\dot{Q}_K$

Fig. 3

V

T

t

Fig. 4

Fig. 5

Fig. 6

Fig. 7

Fig. 8

Fig. 9